# EUROPEAN PATENT APPLICATION

(11) **EP 3 477 074 A1**
(43) Date of publication of application: **01.05.2019**
(21) Application number: 17903826.0
(22) Date of filing: 30.03.2017
(51) Int. Cl.: F02B 37/18

(54) **EXHAUST BYPASS DEVICE AND SUPERCHARGER**

(71) Applicant: Mitsubishi Heavy Industries Engine & Turbocharger, Ltd., Sagamihara-shi, Kanagawa 252-5293 (JP)
(72) Inventor: YOSHIMI, Takeshi, Tokyo 108-8215 (JP); ISHIZAKI, Tatsuya, Tokyo 108-8215 (JP); HAYASHI, Noriyuki, Tokyo 108-8215 (JP); NAGAYO, Yukihide, Tokyo 108-8215 (JP); KATOU, Eigo, Tokyo 108-8215 (JP); EBISU, Motoki, Sagamihara-shi Kanagawa 252-5293 (JP); YAMAGUCHI, Ko, Sagamihara-shi Kanagawa 252-5293 (JP); SHIGETA, Ryoji, Sagamihara-shi Kanagawa 252-5293 (JP)
(74) Representative: Mader, Joachim
(86) International application number: PCT/JP2017/013340
(87) International publication number: WO 2018/179258

(57) **Abstract**

Provided are an exhaust bypass device and a turbocharger. The present invention is provided with: an actuator (31) for reciprocating a driving-rod (41) in the axial direction; a support shaft (34) rotatably supported in a housing (46); a connection link (33) having one end portion and the other end portion, wherein the one end portion is rotatably connected to a tip portion of the driving-rod (41), and the other end portion is fixed to one end portion in the axial direction of the support shaft (34); a waste gate valve (36) connected to the other end portion in the axial direction of the support shaft (34); and a compressive coil spring (61) disposed between the housing (46) and the connection link (33), and having a coil diameter that varies along the axial direction.

## Description

### Technical Field

The present invention relates to an exhaust bypass device that makes exhaust gas discharged from an engine bypass a turbine instead of flowing into the turbine, and to a turbocharger including the exhaust bypass device.

### Background Art

Turbochargers include a compressor and a turbine that are connected to each other via a rotation shaft to integrally rotate. Such a turbocharger operates in the following manner. Specifically, the turbine is rotated by exhaust gas flowing in a discharge path. The rotation of the turbine is transmitted through the rotation shaft so that the compressor rotates. The compressor compresses air and supplies the resultant air to the engine through an intake path. The turbocharger is provided with an exhaust bypass device (waste gate valve) that makes the gas bypass the turbine from a portion of the discharge path more on an upstream side than the turbine. When the engine discharges an excessive amount of exhaust gas, the waste gate valve opens so that the exhaust gas is discharged without being supplied to the turbine, whereby boost pressure can be prevented from being excessively risen by increased rotation of the turbine. Thus, a higher operating point of the exhaust gas flow rate under a low load condition is achieved for achieving a higher output of the engine.

The exhaust bypass device used for the turbocharger is configured in the following manner. Specifically, an actuator incorporating a pneumatic bellows and a spring rotates a lever plate, so that a waste gate valve connected to a rotation shaft of the lever plate opens and closes. Thus, in a state where supplying of work fluid to the bellows is stopped, the waste gate valve is closing the bypass path with spring force of the spring member. When the work fluid is supplied to the bellows, the waste gate valve rotates against the spring force of the spring member to open the bypass path.

Such an exhaust bypass device is disposed inside the turbine housing, and thus the components thereof may be exposed to a high temperature atmosphere to have a sliding portion adhered. The actuator is operated by intake pressure, and thus variation of the intake pressure caused by exhaust pulsation of the engine may lead to flapping of the waste gate valve resulting in vibration which may wear the sliding portion. An example of technology with an object of resolving such a problem is described in Patent Document 1.

### Citation List

### Patent Documents

Patent Document 1: JP 2015-129520 A

### Summary of Invention

### Problem to be Solved by the Invention

In an exhaust device of an internal combustion engine described in Patent Document 1, a bush having a cylindrical shape rotatably supports a shaft serving as a valve rotation shaft for a scroll switching valve, and a coil spring is provided for producing biasing force for biasing a gas seal surface of the bush against a bearing seat surface of the shaft. To suppress vibration caused by flapping of a waste gate valve due to exhaust pulsation of the engine, the coil spring needs to provide a certain amount of pressing load. To increase the pressing load provided by the coil spring, an increased coil diameter or coil turns is required, but this results in a larger coil spring. A larger coil spring results in a larger exhaust bypass device requiring a larger space to be disposed.

The present invention is made to solve the problem described above, and an object of the present invention is to provide an exhaust bypass device and a turbocharger that can reduce wearing at an operating portion to achieve higher reliability, while ensuring a favorable operation of a waste gate valve.

### Solution to Problem

An exhaust bypass device according to the present invention for achieving the object includes: an actuator for reciprocating a driving-rod in an axial direction; a support shaft rotatably supported in a housing; a connection link having one end portion and the other end portion, wherein the one end portion is rotatably connected to a tip portion of the driving-rod, and the other end portion is fixed to one end portion in the axial direction of the support shaft; a waste gate valve connected to the other end portion in the axial direction of the support shaft; and a compressive coil spring disposed between the housing and the connection link, and having a coil diameter that varies along the axial direction.

With this configuration, when the drive rod of the actuator is driven, the resultant driving force is transmitted to the connection link and the connection link rotated about the support shaft, whereby the waste gate valve opens and closes. In this process, the compressive coil spring applies the biasing force to press the connection link against the housing in the axial direction, so that vibration of the connection link due to exhaust pulsation can be suppressed. Thus, this configuration can reduce wearing of a sliding portion between the housing and the support shaft to improve reliability, while ensuring a favorable operation of the waste gate valve. With the compressive coil spring with a coil diameter varying along the axial direction, portions of the coil are shifted from each other in a radial direction, and thus the coil diameter can be increased so that biasing force on the connection link can be increased for effectively suppressing vibration of the connecting link. Furthermore, the compressive coil spring can have a larger coil diameter with an increase in the total length suppressed, so that an increase in the size of the device can be suppressed.

In the exhaust bypass device according to the present invention, the compressive coil spring is a compressive coil spring having an hourglass shape.

The compressive coil spring having the hourglass shape disposed between the housing and the connection link has the coil diameter of each of seat portions set to be larger than a coil diameter at an intermediate portion in the axial direction. Thus, the compressive coil spring can have a long length between the center position and contact positions between the seat portions and the housing and the connection link, whereby the pressing force to the housing and the connection link can be increased.

In the exhaust bypass device according to the present invention, the compressive coil spring is a compressive coil spring having a barrel shape.

The compressive coil spring having a barrel shape disposed between the housing and the connection link can have a larger coil diameter, and thus can provide increased biasing force on the connection link, whereby the vibration of the connection link can be effectively suppressed while suppressing an increase in the size of the device large.

In the exhaust bypass device according to the present invention, a support cylinder having a cylindrical shape is fixed to the housing, and the compressive coil spring is disposed between the housing and the connection link, on outer side of the support cylinder in a radial direction.

With the compressive coil spring is disposed on the outer side of the support cylinder in the radial direction, interference between the support shaft and the compressive coil spring can be suppressed.

In the exhaust bypass device according to the present invention, the support cylinder has one end portion in the axial direction protruding toward the connection link from an end surface of the housing, and the compressive coil spring is disposed on an outer side of an outer circumference surface of the support cylinder.

With the compressive coil spring disposed on the outer side of the outer circumference surface of the support cylinder, the support cylinder is positioned between the support shaft and the compressive coil spring, whereby interference between the support shaft and the compressive coil spring can be effectively suppressed.

A turbocharger according to the present invention includes: a compressor; a turbine; a rotation shaft that coaxially connects the compressor and the turbine with each other; and the exhaust bypass device.

With this configuration, when the waste gate valve is opened and closed while the turbocharger is operating, the compressive coil spring applies biasing force to press the connection link against the housing in the axial direction, whereby the vibration of the connection link due to the exhaust pulsation can be suppressed. Thus, this configuration can reduce wearing of a sliding portion between the housing and the support shaft to improve reliability, while ensuring a favorable operation of the waste gate valve. With the compressive coil spring with a coil diameter varying along the axial direction, portions of the coil are shifted from each other in a radial direction, and thus the coil diameter can be increased so that biasing force on the connection link can be increased for effectively suppressing vibration of the connecting link. Furthermore, the compressive coil spring can have a larger coil diameter with an increase in the total length suppressed, so that an increase in the size of the device can be suppressed.

### Advantageous Effect of Invention

The exhaust bypass device and the turbocharger according to the present invention can reduce wearing at an operating portion to achieve higher reliability, while ensuring a favorable operation of a waste gate valve.

### Brief Description of Drawings

FIG. 1 is a schematic configuration diagram of an engine to which an exhaust bypass device according to a first embodiment is applied.
FIG. 2 is a perspective view illustrating an overall configuration of the exhaust bypass device.
FIG. 3 is a vertical cross-sectional view taken at a position of a support shaft in the exhaust bypass device.
FIG. 4 is a front view of the compressive coil spring having an hourglass shape.
FIG. 5 is a cross-sectional view illustrating how the compressive coil spring is assembled.
FIG. 6 is a vertical cross-sectional view taken at a position of a support shaft in an exhaust bypass device according to a second embodiment.
FIG. 7 is a front view of a compressive coil spring having a barrel shape.

### Description of Embodiments

Preferred embodiments of an exhaust bypass device and a turbocharger according to the present invention are described in detail below with reference to the attached drawings. Note that the present invention is not limited by these embodiments, and when a plurality of embodiments is present, the present invention is intended to include a configuration combining these embodiments.

### First Embodiment

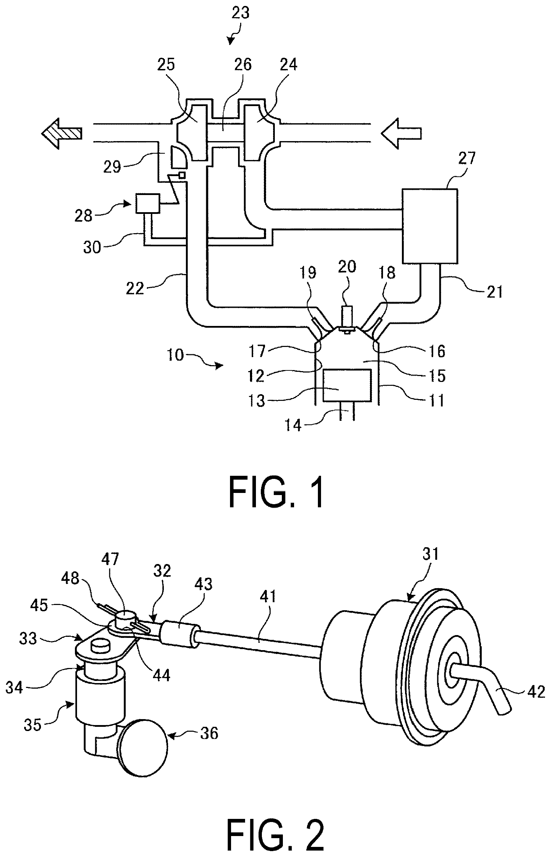

FIG. 1 is a schematic configuration diagram of an engine to which an exhaust bypass device according to a first embodiment is applied.

An engine 10 according to the first embodiment is a multi-cylinder internal combustion engine as illustrated in FIG. 1. An engine main body 11, formed with a cylinder head fastened on a cylinder block, is provided with a plurality of cylinder bores 12. A piston 13 is supported in each of the cylinder bores 12 via a cylinder liner (not illustrated) to be movable upward and downward. Although not elaborated in the figure, the engine main body 11 has a lower portion rotatably supporting a crankshaft. Each piston 13 is connected to the crankshaft via a connecting rod 14.

A combustion chamber 15 is defined by a wall surface and a bottom surface of the cylinder bore 12 and a top surface of the piston 13. The combustion chamber 15 has an intake port 16 and a discharge port 17 arranged on its upper side, that is, on the engine main body 11. An intake valve 18 and a discharge valve 19 have lower end portions respectively positioned at the intake port 16 and the discharge port 17. The intake valve 18 and the discharge valve 19 are supported by the engine main body 11 in such a manner as to be movable along an axial direction, and are supported while being biased in a direction (the upward direction in FIG. 1) to close the intake port 16 and the discharge port 17. The intake valve 18 and the discharge valve 19 can open and close the intake port 16 and the discharge port 17 with operations of an intake cam and a discharge cam of an intake cam shaft and a discharge cam shaft (not illustrated). The combustion chamber 15 has a fuel injection valve 20 provided on its upper side, that is, on the engine main body 11. High-pressure fuel can be injected into the combustion chamber 15 through the fuel injection valve 20.

With this configuration, the engine 10 performs four strokes (intake stroke, compression stroke, expansion stroke, and exhaust stroke), while the crankshaft rotates twice. In this process, the intake cam shaft and the discharge cam shaft rotate for a single time, and the intake valve 18 and the discharge valve 19 open and close the intake port 16 and the discharge port 17.

The engine main body 11 has the intake port 16 and the discharge port 17 respectively connected to an intake path 21 and a discharge path 22. The turbocharger 23 includes a compressor 24 and a turbine 25 connected to each other via a rotation shaft 26 to integrally rotate. Such a turbocharger 23 is operated in the following manner. Specifically, the turbine 25 is rotated by exhaust gas flowing in the discharge path 22 of the engine main body 11. The rotation of the turbine 25 is transmitted through the rotation shaft 26 so that the compressor 24 rotates. The compressor 24 compresses air and supplies the resultant air to the engine main body 11 through the intake path 21. An intercooler 27 is attached to the intake path 21.

The discharge path 22 is provided with an exhaust bypass device 28 corresponding to the attached position of the turbine 25. The discharge path 22 includes a bypass path 29 that is branched off at a position of the discharge path 22 on the upstream side of the turbine 25 in a flow direction of the exhaust gas, and is connected to a position of the discharge path 22 on a downstream side of the turbine 25 in the flow direction of the exhaust gas. An application path 30 has one end portion connected between the compressor 24 and the intercooler 27 in the intake path 21, and has the other end portion connected to the actuator of the exhaust bypass device 28. Although not elaborated in the figure, the application path 30 is provided with a three-way solenoid valve with which a time period during which the actuator is in communication with the intake path 21, and a time period during which the actuator is in communication with the atmosphere are alternately switched. With the ratio between the time periods changed, the pressure in the actuator can be set based on an appropriate ratio between intake pressure and atmospheric pressure. Thus, the exhaust bypass device 28 can adjust the amount of exhaust gas that bypasses the turbine 25, that is, the amount of exhaust gas supplied to the turbine 25 by opening and closing the bypass path 29 with the intake pressure in the intake path 21.

Thus, in the engine main body 11, when air is supplied from the intake path 21 to the combustion chamber 15, the piston 13 rises so that the air is compressed, and when the high-pressure fuel is injected into the combustion chamber 15 from the fuel injection valve 20, the high-pressure fuel is ignited and burns. The resultant combustion gas is discharged to the discharge path 22 as exhaust gas. The exhaust gas discharged from the combustion chamber 15 rotates the turbine 25 of the turbocharger 23, so that the compressor 24 is rotated via the rotation shaft 26, whereby turbocharging is performed on the combustion chamber 15. When the bypass path 29 is opened by the exhaust bypass device 28, the exhaust gas passes through the bypass path 29 to bypass the turbine 25.

The exhaust bypass device 28 will be described. FIG. 2 is a perspective view illustrating an overall configuration of the exhaust bypass device.

As illustrated in FIG. 2, the exhaust bypass device 28 includes an actuator 31, a connection rod 32, a connection link 33, a support shaft 34, a support cylinder (bush) 35, and a waste gate valve 36.

The actuator 31 is provided with a driving-rod 41, and reciprocates the driving-rod 41 in the axial direction, in accordance with the intake pressure. Although not elaborated in the figure, the actuator 31 has an inner space partitioned into two chambers by a gate valve to which a base end portion of the driving-rod 41 is connected. The gate valve is biased in a direction (right direction in FIG. 2) to which the driving-rod 41 is pulled in, with biasing force of a spring contained in one of the chambers. An application tube 42 (application path 30) with which the intake pressure is applied is connected to the other one of the chambers. Thus, in the actuator 31, the driving-rod 41 is stopped at a position as a result of being pulled in by the biasing force of the spring applied to the gate valve. Then, when the intake pressure is applied to the other chamber through the application tube 42, the gate valve moves against the biasing force of the spring, and the driving-rod 41 that is integrated with the gate valve moves in a protruding direction.

The driving-rod 41 has a tip portion to which a base end portion of the connection rod 32 is connected via a connection portion 43. The driving-rod 41, the connection portion 43, and the connection rod 32 are substantially linearly disposed. The connection rod 32 has a tip portion provided with a connection ring portion 45 on which a connection hole 44 is formed.

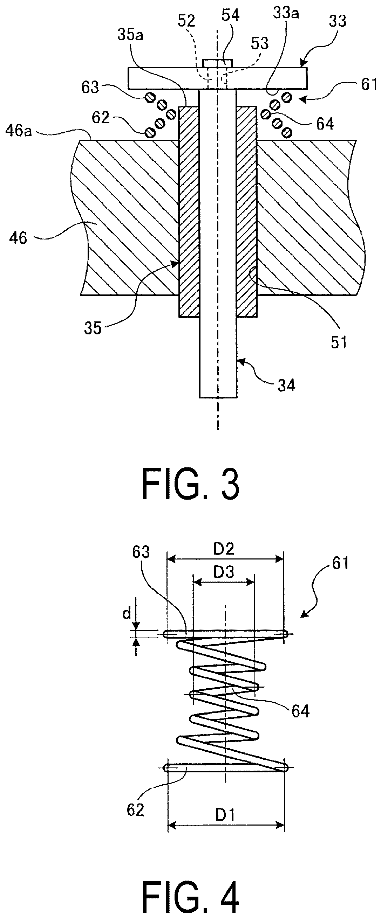

The support shaft 34 has a circular column shape, and is rotatably supported by the support cylinder 35 that has a cylindrical shape and is fixed to a housing 46 (see FIG. 3). A gap large enough for the support shaft 34 to rotate relative to the support cylinder 35 is provided between the outer circumference surface of the support shaft 34 and the inner circumference surface of the support cylinder 35.

The connection link 33 has a shape of a plate having a predetermined thickness, and has an elliptical shape in a plan view. The connection link 33 has one end portion integrally formed with a connection shaft 47. The connection shaft 47 fits in the connection hole 44 formed in the connection ring portion 45 of the connection rod 32, so that the connection link 33 and the connection rod 32 are rotatably connected with each other. An engagement pin 48 is engaged to a portion of the connection shaft 47 that is more on the distal end side than the connection ring portion 45 in the axial direction, so that the connection shaft 47 can be prevented from being pulled out from the connection hole 44 of the connection ring portion 45. The connection link 33 has the other end portion fixed to one end portion of the support shaft 34 in the axial direction. The waste gate valve 36 is fixed to the other end portion of the support shaft 34 in the axial direction. Thus, the connection link 33 and the waste gate valve 36 can rotate about the support shaft 34.

With this configuration, the longitudinal direction (linear direction) of the driving-rod 41, the connection portion 43, and the connection rod 32 is substantially orthogonal to the axial direction of the support shaft 34. The axial direction of the connection shaft 47 of the connection link 33 is substantially parallel with the axial direction of the support shaft 34.

Thus, when the actuator 31 operates, the driving-rod 41 moves in the protruding axial direction to protrude, and the connection rod 32 moves in the same direction via the connection portion 43. When the connection rod 32 moves in the longitudinal direction, the connection rod 32 and the connection link 33 rotate relative to each other, and the connection link 33 rotates about the support shaft 34 together with the support shaft 34. When the support shaft 34 rotates, the waste gate valve 36 integrally provided to the support shaft 34 moves from a closed position to an open position.

The exhaust bypass device 28 according to the present embodiment has a compressive coil spring disposed between the housing 46 and the connection link 33. FIG. 3 is a vertical cross-sectional view taken at a position of the support shaft in the exhaust bypass device. FIG. 4 is a front view of the compressive coil spring having an hourglass shape.

As illustrated in FIG. 3, the housing 46 has an attachment hole 51 in which the support cylinder 35 is fixed. The support shaft 34 is fit in the support cylinder 35 to be rotatably supported. The support shaft 34 has one end portion in the axial direction integrally provided with a coaxially extending connection pin 52. The connection pin 52 has a smaller outer diameter than the support shaft 34. The connection link 33 has an attachment hole 53 formed. The connection pin 52 of the support shaft 34 fits in the attachment hole 53 of the connection link 33 and is welded. Specifically, the support shaft 34 has a welded portion 54 formed at a tip portion of the connection pin 52 fit in the attachment hole 53 of the connection link 33. Thus, an end portion of the connection link 33 is fixed to one end portion of the support shaft 34 in the axial direction.

As illustrated in FIG. 4, a compressive coil spring 61 has an hourglass shape to have a coil diameter varying along the axial direction. The compressive coil spring 61 has one side in the axial direction provided with a seat portion 62, and has the other side in the axial direction provided with a seat portion 63. The seat portions 62 and 63 respectively have coil diameters D1 and D2 that are the same. The compressive coil spring 61 has a small diameter portion 64 that is provided at an intermediate portion in the axial direction and has a coil diameter D3 smaller than each of the coil diameters D1 and D2 of the seat portions 62 and 63. The compressive coil spring 61 has a coil diameter d that is uniform over the entire coil in the longitudinal direction.

As illustrated in FIG. 3, the compressive coil spring 61 having an hourglass shape is disposed between the housing 46 and the connection link 33. The compressive coil spring 61 has the seat portion 62 in contact with an end surface 46a of the housing 46 and has the seat portion 63 in contact with a planer portion 33a on the lower surface side of the connection link 33.

With this configuration, the support cylinder 35 is fixed to the housing 46, and the compressive coil spring 61 is disposed between the housing 46 and the connection link 33, on the outer side of the support cylinder 35 in a radial direction. The support cylinder 35 has one end portion (an upper end portion in FIG. 3) 35a in the axial direction protruding toward the connection link 33 from the end surface 46a of the housing 46, and the compressive coil spring 61 is disposed more on the outer side than the outer circumference surface of the support cylinder 35.

With the configuration described above, the connection link 33 is supported on the housing 46 while being biased toward the one side of the support shaft 34 in the axial direction, by the biasing force of the compressive coil spring 61. The compressive coil spring 61 has the seat portion 62 pressed against the end surface 46a of the housing 46, and has the seat portion 63 pressed against the planer portion 33a of the connection link 33. Thus, the position of the connection link 33, relative to the housing 46, in a direction of rotation is retained by the biasing force of the compressive coil spring 61. The connection link 33 rotates by overwhelming frictional resistance between each of the seat portions 62 and 63 of the compressive coil spring 61 and a corresponding one of the end surface 46a of the housing 46 and the planer portion 33a of the connection link 33, and the biasing force of the compressive coil spring 61. Thus, even when the exhaust pulsation that may vibrate the waste gate valve 36 (see FIG. 2) is applied, the connection link 33 has the position retained by the compressive coil spring 61 so that vibration thereof is suppressed. Consequently, wearing of a sliding portion between the connection rod 32 and the connection link 33, as well as a sliding portion between the support shaft 34 and the support cylinder 35 can be suppressed.

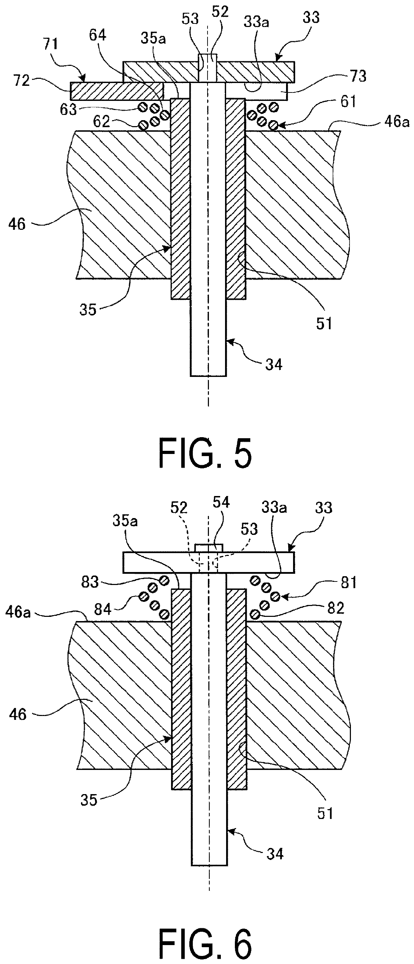

How the compressive coil spring 61 is assembled is described. FIG. 5 is a cross-sectional view illustrating how the compressive coil spring is assembled.

As illustrated in FIG. 5, first of all, the support shaft 34 is inserted in the support cylinder 35 fixed to the housing 46, and the compressive coil spring 61 is disposed on the outer circumference side of the support cylinder 35. Next, the compressive coil spring 61 is compressed by using a pressing jig 71. The pressing jig 71 is formed with a pressing portion 73 having a bifurcated shape provided at a tip portion of a jig main body 72. An operator robot or an operator holds the jig main body 72 of the pressing jig 71, and presses the compressive coil spring 61 against the housing 46 with the pressing portion 73 having a bifurcated shape (U shape). The connection pin 52 of the support shaft 34 is fit in the attachment hole 53 of the connection link 33. At this point, the pressing jig 71 is positioned between the connection link 33 and the compressive coil spring 61. In this state, the connection link 33 and the tip portion of the connection pin 52 are welded to each other with a welding device (not illustrated). As a result, as illustrated in FIG. 3, the welded portion 54 is formed at the tip portion of the connection pin 52, whereby the support shaft 34 and the connection link 33 are integrally connected and fixed to each other. Then, the pressing jig 71 between the connection link 33 and the compressive coil spring 61 is pulled out.

With the pressing jig 71 positioned between the connection link 33 and the compressive coil spring 61 during this welding operation, no heat input due to the welding is applied to the compressive coil spring 61 when the tip portion of the connection pin 52 and the connection link 33 are welded with the welding device, whereby the compressive coil spring 61 can be prevented from deforming.

As described above the exhaust bypass device according to the first embodiment includes: the actuator for reciprocating the driving-rod in the axial direction; the support shaft rotatably supported in the housing; the connection link having one end portion and the other end portion, wherein the one end portion is rotatably connected to a tip portion of the driving-rod, and the other end portion is fixed to one end portion in the axial direction of the support shaft; the waste gate valve connected to the other end portion in the axial direction of the support shaft; and the compressive coil spring disposed between the housing and the connection link, and having a coil diameter that varies along the axial direction.

With this configuration, the compressive coil spring 61 applies the biasing force to press the connection link 33 against the housing 46 in the axial direction, so that vibration of the connection link 33 due to the exhaust pulsation can be suppressed. Thus, this configuration can reduce wearing between the sliding portion between the housing 46 and the support shaft 34 to improve reliability, while ensuring a favorable operation of the waste gate valve 36.

The compressive coil spring 61 having a coil diameter varying in the axial direction used as described above has portions of the coil in the compressed state shifted from each other in the radial direction, so that a short entire length in the compressed state can be achieved and a large coil diameter can be set. The compressive coil spring 61 with a large coil diameter has a large spring constant to provide large biasing force. Thus, larger pressing force can be applied to the connection link 33 to increase the frictional resistance, whereby the vibration of the connection link 33 can be effectively suppressed. Furthermore, the compressive coil spring 61 can have a larger coil diameter with an increase in the total length suppressed, so that an increase in the size of the device can be suppressed.

In the exhaust bypass device according to the first embodiment, the compressive coil spring 61 having an hourglass shape is used as the compressive coil spring. The compressive coil spring 61 having the hourglass shape disposed between the housing 46 and the connection link 33 has the coil diameter of each of the seat portions 62 and 63 set to be larger than the coil diameter at an intermediate portion in the axial direction. Thus, the compressive coil spring 61 can have a long length between the center position and contact positions between the seat portions 62 and 63 and the housing 46 and the connection link 33, whereby the pressing force to the housing 46 and the connection link 33 can be increased.

In the exhaust bypass device according to the first embodiment, the support cylinder 35 is fixed to the housing 46, and the compressive coil spring 61 is disposed between the housing 46 and the connection link 33, on the outer side of the support cylinder 35 in the radial direction. With this configuration, interference between the support shaft 34 and the compressive coil spring 61 can be suppressed.

In the exhaust bypass device according to the first embodiment, the one end portion 35a of the support cylinder 35 in the axial direction protrudes toward the connection link 33 from the end surface 46a of the housing 46, and the compressive coil spring 61 is disposed on the outer side of the outer circumference surface of the support cylinder 35. With the support cylinder 35 thus positioned between the support shaft 34 and the compressive coil spring 61, the interference between the support shaft 34 and the compressive coil spring 61 can be effectively suppressed.

The turbocharger according to the first embodiment includes the compressor 24, the turbine 25, the rotation shaft 26 that coaxially connects the compressor 24 and the turbine 25 with each other, and the exhaust bypass device 28. With this configuration, when the waste gate valve 36 is opened and closed while the turbocharger 23 is operating, the compressive coil spring 61 applies biasing force to press the connection link 33 against the housing 46 in the axial direction, whereby the vibration of the connection link 33 due to the exhaust pulsation can be suppressed. Thus, this configuration can reduce wearing between the sliding portion between the housing 46 and the support shaft 34 to improve reliability, while ensuring a favorable operation of the waste gate valve 36.

### Second Embodiment

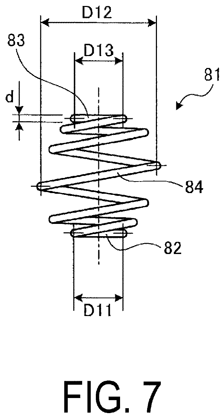

FIG. 6 is a vertical cross-sectional view taken at a position of a support shaft in an exhaust bypass device according to a second embodiment. FIG. 7 is a front view of a compressive coil spring having a barrel shape. Note that the same reference numerals are given to members having the same functions as the embodiments described above and detailed description thereof will be omitted.

The exhaust bypass device according to the second embodiment has a compressive coil spring 81 disposed between the housing 46 and the connection link 33 as illustrated in FIG. 6.

As illustrated in FIG. 7, the compressive coil spring 81 has a barrel shape to have a coil diameter varying along the axial direction. The compressive coil spring 81 has one side in the axial direction provided with a seat portion 82, and has the other side in the axial direction provided with a seat portion 83. The seat portions 82 and 83 respectively have coil diameters D11 and D12 that are the same. The compressive coil spring 81 has a large diameter portion 84 that is provided at an intermediate portion in the axial direction and has a coil diameter D13 larger than each of the coil diameters D11 and D12 of the seat portions 82 and 83. The compressive coil spring 81 has a coil diameter d that is uniform over the entire coil in the longitudinal direction.

As illustrated in FIG. 6, the compressive coil spring 81 having a barrel shape is disposed between the housing 46 and the connection link 33. The compressive coil spring 81 has the seat portion 82 in contact with the end surface 46a of the housing 46 and has the seat portion 83 in contact with the planer portion 33a on the lower surface side of the connection link 33.

With this configuration, the support cylinder 35 is fixed to the housing 46, and the compressive coil spring 81 is disposed between the housing 46 and the connection link 33, on the outer side of the support cylinder 35 in the radial direction. The support cylinder 35 has one end portion (an upper end portion in FIG. 6) 35a in the axial direction protruding toward the connection link 33 from the end surface 46a of the housing 46, and the compressive coil spring 81 is disposed more on the outer side than the outer circumference surface of the support cylinder 35.

With the configuration described above, the connection link 33 is supported on the housing 46 while being biased toward the one side of the support shaft 34 in the axial direction, by the biasing force of the compressive coil spring 81. The compressive coil spring 81 has the seat portion 82 pressed against the end surface 46a of the housing 46, and has the seat portion 83 pressed against the planer portion 33a of the connection link 33. Thus, the position of the connection link 33, relative to the housing 46, in a direction of rotation is retained by the biasing force of the compressive coil spring 81. The connection link 33 rotates only when overwhelming frictional resistance between each of the seat portions 82 and 83 of the compressive coil spring 81 and a corresponding one of the end surface 46a of the housing 46 and the planer portion 33a of the connection link 33, and the biasing force of the compressive coil spring 81. Thus, even when the exhaust pulsation that may vibrate the waste gate valve 36 (see FIG. 2) is applied, the connection link 33 has the position retained by the compressive coil spring 81 and thus the vibration thereof is suppressed. Consequently, wearing of a sliding portion between the connection rod 32 and the connection link 33, as well as a sliding portion between the support shaft 34 and the support cylinder 35 can be suppressed.

In this manner, the exhaust bypass device according to the second embodiment has the compressive coil spring 81 having a barrel shape disposed between the housing 46 and the connection link 33.

Thus, portions of the compressive coil spring 81 in the compressed state are shifted from each other in the radial direction, so that a short total length in the compressed state can be achieved and a large coil diameter can be set, whereby larger biasing force can be applied to the connection link 33 and the vibration of the connection link 33 can be effectively suppressed. Furthermore, the compressive coil spring 81 can have a larger coil diameter with an increase in the total length suppressed, so that an increase in the size of the device can be suppressed.

In the embodiments described above, the compressive coil spring 81 having the hourglass shape and the compressive coil spring 81 having the barrel shape are used as the compressive coil spring having the coil diameter varying along the axial direction. However, these configurations should not be construed in a limiting sense. For example, a compressive coil spring having a circular truncated cone shape or an inverted circular truncated cone shape may be used.

In the embodiments described above, the support cylinder 35 is fixed to the housing 46, and the support shaft 34 is rotatably supported by the support cylinder 35. Alternatively, a supporting hole may be directly formed on the housing 46, and the support shaft 34 may be rotatably supported in the supporting hole.

In the embodiments described above, the connection rod 32 is connected to the tip portion of the driving-rod 41, and the tip portion of the connection rod 32 and one end portion of the connection link 33 are rotatably connected to each other. Alternatively, the tip portion of the driving-rod 41 and one end portion of the connection link 33 may be rotatably connected to each other directly.

### Reference Signs List

10 Engine
11 Engine main body
13 Piston
15 Combustion chamber
21 Intake path
22 Discharge path
23 Turbocharger
24 Compressor
25 Turbine
26 Rotation Shaft
28 Exhaust bypass device
29 Bypass path
30 Application path
31 Actuator
32 Connection rod
33 Connection link
34 Support shaft
35 Support cylinder
36 Waste gate valve
41 Drive rod
45 Connection ring portion
46 Housing
47 Linking shaft
48 Engagement pin
54 Welded portion
61, 81 Compressive coil spring
62, 63, 82, 83 Seat portion
64 Small diameter portion
71 Pressing jig
84 Large diameter portion

## Claims

1. An exhaust bypass device comprising:
an actuator for reciprocating a driving-rod in an axial direction;
a support shaft rotatably supported in a housing;
a connection link having one end portion and the other end portion, wherein the one end portion is rotatably connected to a tip portion of the driving-rod, and the other end portion is fixed to one end portion in the axial direction of the support shaft;
a waste gate valve connected to the other end portion in the axial direction of the support shaft; and
a compressive coil spring disposed between the housing and the connection link, and having a coil diameter that varies along the axial direction.

2. The exhaust bypass device according to claim 1, wherein the compressive coil spring is a compressive coil spring having an hourglass shape.

3. The exhaust bypass device according to claim 1, wherein the compressive coil spring is a compressive coil spring having a barrel shape.

4. The exhaust bypass device according to any one of claims 1 to 3, wherein a support cylinder having a cylindrical shape is fixed to the housing, and the compressive coil spring is disposed between the housing and the connection link, on outer side of the support cylinder in a radial direction.

5. The exhaust bypass device according to claim 4, wherein the support cylinder has one end portion in an axial direction protruding toward the connection link from an end surface of the housing, and the compressive coil spring is disposed on an outer side of an outer circumference surface of the support cylinder.

6. A turbocharger comprising:
a compressor;
a turbine;
a rotation shaft that coaxially connects the compressor and the turbine with each other; and
the exhaust bypass device according to any one of claims 1 to 5.

## Amended claims

### Amended claims under Art. 19.1 PCT

1. (Amended)
An exhaust bypass device comprising:
an actuator for reciprocating a driving-rod in an axial direction;
a support shaft rotatably supported in a housing;
a connection link having one end portion and the other end portion, wherein the one end portion is rotatably connected to a tip portion of the driving-rod, and the other end portion is fixed to one end portion in the axial direction of the support shaft;
a waste gate valve connected to the other end portion in the axial direction of the support shaft; and
a compressive coil spring disposed between the housing and the connection link, and having a coil diameter that varies along the axial direction, wherein
a support cylinder having a cylindrical shape is fixed to the housing, and the compressive coil spring is disposed between the housing and the connection link, on outer side of the support cylinder in a radial direction, and
the support cylinder has one end portion in an axial direction protruding toward the connection link from an end surface of the housing, and the compressive coil spring is disposed on an outer side of an outer circumference surface of the support cylinder.

2. The exhaust bypass device according to claim 1, wherein the compressive coil spring is a compressive coil spring having an hourglass shape.

3. The exhaust bypass device according to claim 1, wherein the compressive coil spring is a compressive coil spring having a barrel shape.

4. (Deleted)

5. (Deleted)

6. (Amended)
A turbocharger comprising:
a compressor;
a turbine;
a rotation shaft that coaxially connects the compressor and the turbine with each other; and
the exhaust bypass device according to any one of claims 1 to 3.

Statement under Art. 19.1 PCT
Claims 4 and 5, as well as limitation on the shape of the compressive coil spring added to claim 1 by way of amendment. This amendment is based on the description in the paragraph [0040] of the specification, and in FIG. 3 and FIG. 6.

Claims 4 and 5 have been deleted by way of amendment.

Claim cited by claim 6 is changed by way of amendment.
